Europäisches Patentamt

European Patent Office

Office européen des brevets

(11) Veröffentlichungsnummer: **0 502 250 A1**

# EUROPÄISCHE PATENTANMELDUNG

(21) Anmeldenummer: **91120678.7**

(22) Anmeldetag: **02.12.91**

(51) Int. Cl.5: **B32B 17/10**, C03C 27/12

(30) Priorität: **19.02.91 DE 4104983**

(43) Veröffentlichungstag der Anmeldung:
**09.09.92 Patentblatt 92/37**

(84) Benannte Vertragsstaaten:
**AT CH DE ES FR GB IT LI SE**

(71) Anmelder: **Schott Glaswerke**
**Hattenbergstrasse 10**
**W-6500 Mainz 1(DE)**

(84) **CH DE ES FR IT LI SE AT**

(71) Anmelder: **Carl-Zeiss-Stiftung trading as**
**SCHOTT GLASWERKE**
**Hattenbergstrasse 10**
**W-6500 Mainz 1(DE)**

(84) **GB**

(72) Erfinder: **Scheidler, Herwig**
**Zeisigweg 5**
**W-6500 Mainz(DE)**
Erfinder: **Schaupert, Kurt, Dr.**
**Rüdesheimer Strasse 46**
**W-6238 Hofheim-Wallau(DE)**
Erfinder: **Taplan, Martin**
**Rheinstrasse 166**
**W-6507 Ingelheim(DE)**
Erfinder: **Schultheis, Bernd**
**Silvaner Weg 2**
**W-6501 Schwabenheim(DE)**

(54) **Durchsichtiger, mit einer Profilierung versehener Gegenstand mit einem Sichtfenster, insb. Scheibe aus Glas oder Glaskeramik und Verfahren zu seiner Herstellung.**

(57) Es wird ein Sichtfenster sowie ein Verfahren zur Herstellung eines Sichtfensters in einem durchsichtigen, mit einer Profilierung versehenen Gegenstand, insbesondere einer Scheibe aus Glas oder Glaskeramik beschrieben, wobei das Sichtfenster durch Ausfüllen des Profils mit einer durchsichtigen Masse erzeugt wird, wobei die Masse so aufgetragen wird, daß im Bereich des Sichtfensters dadurch eine nach außen weisende glatte ebene Oberfläche erzielt wird. Durch die Auffüllung des Profils mit der Masse wird die durch das Profil hervorgerufene störende optische Verzerrung beseitigt.

Fig. 1

Die Erfindung betrifft einen durchsichtigen, mit einer Profilierung bzw. Strukturierung versehenen Gegenstand mit einem Sichtfenster, insbesondere einer Scheibe aus Glas oder Glaskeramik, sowie ein Verfahren zu seiner Herstellung.

Durchsichtige Scheiben sind häufig mit einer Profilierung bzw. Strukturierung z.B. einem Rillen- oder einem Punktmuster versehen, durch die die klare Durchsicht durch die Scheibe be- oder verhindert wird. Die Profilierung wird entweder absichtlich vorgenommen, z.B. bei Ornamentglas, wie es bei Badezimmertenstern und dergleichen zur Anwendung kommt, kann aber auch technischen Ursprungs sein, z.B. bei der Herstellung von Flachglas nach bestimmten Zieh- und Walzverfahren.

Durch die Profilierung ist die klare Durchsicht durch derartige Scheiben stark beeinträchtigt oder nicht möglich. Es ist jedoch vielfach erwünscht, in derartigen Scheiben Sichtfenster zu haben, d.h. Bereiche, in denen die Scheibe eine weitgehend klare Durchsicht besitzt. Derartige Sichtfenster können erwünscht sein, um eine auf der anderen Seite der Scheibe angeordnete Skala, ein Thermometer oder eine ähnliche Anzeigeeinrichtung beobachten zu können.

Es ist, z.B. aus der früheren Spiegelglasherstellung, bekannt, derartige profilierte Scheiben durch Abschleifen des Profils und Polieren klar durchsichtig zu machen.

Die Erzeugung eines Sichtfensters durch Abschleifen des Profils und Polieren ist aber außerordentlich aufwendig, so daß sich die Aufgabe stellt, ein preiswert herstellbares Sichtfenster für eine mit einer Profilierung versehene Scheibe zu finden.

Diese Aufgabe wird durch das in Patentanspruch 1 beschriebene Sichtfenster sowie das in Patentanspruch 6 beschriebene Verfahren zur seiner Erzeugung gelöst.

Die Erfindung macht sich die Erkenntnis zunutze, daß die verzerrende optische Wirkung der Profilierung dadurch aufgehoben werden kann, daß das Profil im Bereich des Sichtfensters mit einer durchsichtigen Masse aufgefüllt wird, wodurch eine nach außen weisende glatte Oberfläche erzielt wird.

Die Profilierung der Scheiben besteht üblicherweise aus einer Riffelung, einem Noppen- oder Punktmuster oder einem sonstigen optisch wirksamen Profil bestehen. Die Profilierung kann sowohl konvex, d.h. Erhaben als auch konkav, d.h. als Vertiefung in der Scheibe vorliegen. Die derzeitig üblicherweise vorkommenden Profile haben eine Profilhöhe bzw. -tiefe von etwa 0,01 mm (Mattierung) bis ca 1 mm. Es sind jedoch auch größere Profilhöhen denkbar. Die mit dem Profil versehenen Scheiben bestehen aus Kunststoff, Glas, oder Glaskeramik, wobei die beiden letzteren am häufigsten vorkommen.

Die durch die Profilierung hervorgerufene Verzerrung eines durch die Scheibe hindurchgehenden optischen Strahlengangs wird durch die Ausfüllung des Profils mit einer durchsichtigen Masse unter Erzeugung einer nach außenweisenden glatten Oberfläche weitgehend bis vollständig behoben. Die verbleibende Restverzerrung des optischen Strahlengangs wird um so geringer, je ähnlicher der Brechungsindex der durchsichtigen Masse dem des Materials der Scheibe ist. Sind die Brechungsindices gleich, so übt die unter der durchsichtigen Masse liegende Profilierung keinerlei optische Wirkung mehr aus. Es ist jedoch nicht unbedingt erforderlich, die Brechungsindices der durchsichtigen Masse und des Materials der Scheibe absolut gleich zu halten, vielmehr hängt dies mit den an das Sichtfenster gestellten Anforderungen zusammen. Ist die Profilierung nur schwach oder ist der durch das Sichtfenster zu betrachtende Gegenstand unmittelbar hinter dem Sichtfenster angeordnet, so können auch Massen mit abweichenden Brechungsindices benutzt werden. Generell kann gesagt werden, daß der Brechungsindex der Masse dem Material der Scheibe um so stärker angenähert werden sollte, je weiter der zu betrachtende Gegenstand hinter dem Sichtfenster angeordnet ist und je stärker die Profilierung ausgebildet ist. Im allgemeinen wird bevorzugt, wenn der Brechungsindex der durchsichtigen Masse und des Materials der Scheibe nicht mehr als 0,15 voneinander abweichen.

Als Masse, mit der das Profil aufgefüllt wird, kommt jede beliebige Masse in Frage, insofern sie durchsichtig ist. Eine geringfügige Trübung kann, insbesondere bei geringem Abstand des hinter dem Sichtfenster angeordneten Gegenstandes im allgemeinen toleriert werden. Aus Gründen der leichten Aufbringbarkeit werden im allgemeinen organische Massen, d.h. Kunstharze bevorzugt. Besonders geeignet sind aushärtbare Kunstharze, die in hochviskosem Zustand auf die Profilierung aufgetragen werden und die infolge ihrer Oberflächenspannung eine glatte Oberfläche ausbilden. Derartige aushärtende Kunstharze sind in großer Anzahl im Handel erhältlich. Insbesondere geeignet sind Epoxidharze, Silikonharze, Furanharze, Polyesterharze, Acrylharze oder Polyurethanharze. Diese Aufzählung ist jedoch nicht erschöpfend. Weiterhin geeignet sind auch thermoplastische Harze, die eine gute Durchsichtigkeit besitzen, also Polyvinylchloride, Polystyrole, Polyester, darunter insbesondere Acrylharze, die Polycarbonate oder auch Polyvinylacetate und -acetale. Diese Thermoplasten können in erweichter Form mit einem geeigneten Werkzeug, das eine ebene Oberfläche hat, auf die erhitzte oder nicht erhitzte Scheibe aufgedrückt werden und füllen dann das Profil entsprechend aus. Vielfach ist es auch möglich, die thermoplastische Scheibe oder Folie ohne vorheriges Erwärmen einfach auf die erhitzte Scheibe aufzudrücken, mitunter reicht auch einfaches Auflegen.

Da Kunststoffe im allgemeinen eine nicht besonders kratzfeste Oberfläche haben, kann es von Vorteil sein, wenn die Kunststoffoberfläche mit einer durchsichtigen Platte abgedeckt wird. Diese Platte kann aus Glas, Kunststoff oder einer Kunststoffolie bestehen. Besonders vorteilhaft ist es, wenn diese Scheibe auf die nach plastische Masse vor dem Aushärten oder Abkühlen aufgedrückt wird, weil dabei gleichzeitig eine ganz besonders glatte Oberfläche der Kunststoffschicht erzielt wird und die Platten ebenfalls eine glatte Oberfläche besitzen. Die Platte kann auch nach dem Aushärten oder Abkühlen aufgeklebt werden. Auf der der Kunststoffschicht zugewandten Seite kann die Platte ebenfalls ein Profil besitzen.

Die durchsichtige Masse muß wenigstens in einer solchen Stärke auf die profilierte Seite der Scheibe aufgebracht werden, daß das Profil vollständig durch die Masse ausgefüllt wird und sich eine glatte ebene Oberfläche ausbildet. Die Oberfläche soll so glatt sein, daß von einer etwa vorhandenen Welligkeit keine negativen optischen Wirkungen ausgehen. Sollte die Welligkeit dennoch zu groß werden, kann mit Vorteil die oben genannte Abdeckung der Schicht mit einer Platte oder Folie erfolgen. Eine größere Schichtdicke der durchsichtigen Masse trägt zu der optischen Wirkung nichts mehr bei. Insbesondere bei der Verwendung teurerer Kunstharze wird man daher mit möglichst wenig der durchsichtigen Masse auszukommen versuchen. Mitunter können auch zwei Kunstharzschichten zur Anwendung kommen, wobei z.B. auf eine erste Schicht eine weitere Schicht, die eine ganz besonders glatte Oberfläche ergibt, aufgebracht wird. Zur Erzielung besonderer optischer Wirkungen kann die Masse auch eingefärbt werden oder eine zu der Oberfläche der Scheibe geneigte Ebene (z.B. Keilform) besitzen. Die Keilform kann auch durch entsprechende Ausbildung der aufgesetzten Platte erreicht werden. Die Platte kann auch ebenso wie die Masse zur Erreichung bestimmter optischer Effekte farbig sein.

In der Abbildung sind einige Ausführungsformen der Erfindung in beispielhafter Weise dargestellt. Es zeigen

Figur 1     einen Schnitt durch eine Glasscheibe mit einseitiger Profilierung

Figur 2     eine Aufsicht auf die profilierte Seite einer Glasscheibe mit einem Sichtfenster

Figur 3     einen Schnitt durch eine beidseitig profilierte Scheibe mit Sichtfenster

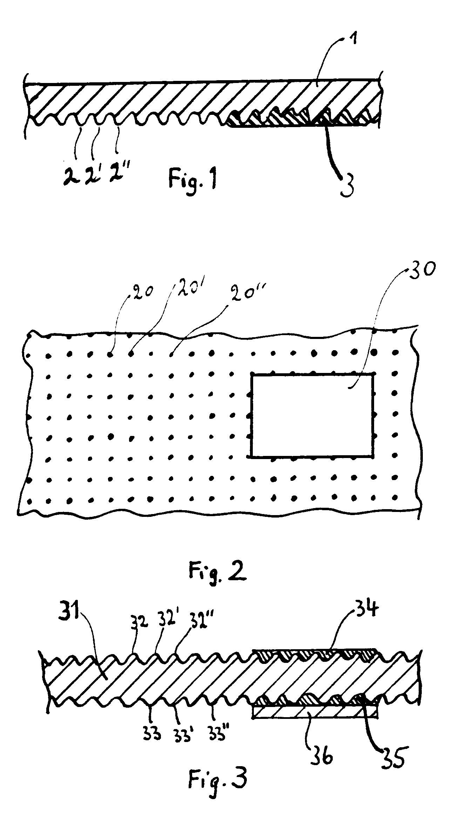

Figur 1 zeigt eine Glasscheibe 1, die mit einer rillenförmigen Profilierung 2 2' 2'' usw. versehen ist. In einem Teilbereich der Scheibe 1 ist die Profilierung mit einem durchsichtigen Epoxidharz 3 aufgefüllt und bildet dadurch ein Sichtfenster. Wie aus Figur 1 weiter ersichtlich ist, ist die Profilierung im Bereich des Sichtfensters unterschiedlich tief, wodurch sich eine unterschiedliche Schichtdicke der Masse 3 ergibt. Diese unterschiedliche Schichtdicke hat jedoch keinen Einfluß auf die Wirkungsweise der Masse. Figur 2 zeigt eine Aufsicht auf einen Teilbereich einer Scheibe, bei der die Profilierung aus einem Noppenmuster 20, 20', 20'' usw. besteht. In der Scheibe ist ein Sichtfenster 30 angebracht, das dadurch erzeugt wurde, daß eine rechteckige, durch Erwärmen auf ca. 200°C in den thermoplastischen Zustand gebrachte Scheibe aus Polykarbonat auf die auf ca. 150°C erwärmte Scheibe aufgepreßt wurde und mit dieser eine innige Verklebung eingegangen ist. Figur 3 schließlich zeigt einen Querschnitt durch eine Scheibe 31, die auf beiden Seiten mit einer wellenförmigen Profilierung 32, 32', 32'' bzw. 33, 33', 33'' usw. versehen ist. Diese Profilierung ist zur Erzeugung eines Sichtfensters auf der Oberseite der Scheibe und der Unterseite der Scheibe mit einem durchsichtigen Silikonharz 34 bzw. 35 ausgefüllt. Die Schicht 35 ist zum Schutz mit einer Glasscheibe 36 abgedeckt. In allen Fällen wird durch das Auffüllen des Profils mit der transparenten Masse eine nach außen weisende glatte und ebene Oberfläche erreicht, wodurch sich eine sehr gute Durchsichtigkeit ergibt.

Die mit der Erfindung zu erzielenden Vorteile bestehen in erster Linie darin, daß es auf sehr einfache und preiswerte Art möglich ist, auch in einer stark profilierten, infolge der durch die Profilierung hervorgerufenen optischen Verzerrungen praktisch undurchsichtigen Glasscheibe ein Sichtfenster zu erzeugen, durch das hinter dem Sichtfenster angeordnete Gegenstände leicht und deutlich erkennbar werden. Derartige Gegenstände können z.B. insbesondere bei der Erzeugung von Sichtfenstern in Glaskeramikkochfeldern Temperaturangaben oder bei Erfordernis aufleuchtende schriftliche Hinweise sein. Insbesondere, wenn diese zu betrachtenden Gegenstände relativ nah hinter dem Sichtfenster angeordnet sind, kann auch auf eine optimale Anpassung des Brechungsindex der auffüllenden Masse an den des profilierten Gegenstandes verzichtet werden.

**Patentansprüche**

1.  Sichtfenster in einem durchsichtigen, mit einer Profilierung versehenen Gegenstand, insbesondere einer Scheibe aus Glas oder Glaskeramik **dadurch gekennzeichnet,** daß die Profilierung im Bereich des Sichtfensters mit mindestens einer durchsichtigen Masse aufgefüllt ist und das Sichtfenster dadurch eine nach außen weisende glatte, ebene

Oberfläche besitzt.

Kunstharz aufgefüllt wird.

2. Gegenstand nach Anspruch 1,
**dadurch gekennzeichnet,**
daß die Masse mit einer durchsichtigen Glas-
oder Kunststoffscheibe oder einer Kunststoffolie abgedeckt ist.

3. Gegenstand nach Anspruch 1 oder 2,
**dadurch gekennzeichnet,**
daß der Brechungsindex der Masse möglichst
weitgehend mit dem des Materials des Gegenstands übereinstimmt.

4. Gegenstand nach wenigstens einem der Ansprüche 1 bis 3,
**dadurch gekennzeichnet,**
daß die Masse ein aushärtbares Kunstharz ist.

5. Gegenstand nach wenigstens einem der Ansprüche 1 bis 3,
**dadurch gekennzeichnet,**
daß die Masse ein thermoplastisches Kunstharz ist.

6. Verfahren zum Erzeugen eines Sichtfensters in
einem durchsichtigen, mit einer Oberflächenprofilierung versehenen Gegenstand, insbesondere einer Scheibe aus Glas oder Glaskeramik
**dadurch gekennzeichnet,**
daß das Profil mit einer durchsichtigen Masse
aufgefüllt wird und daß die Auffüllung so vorgenommen wird, daß eine nach außen weisende glatte Oberfläche erzeugt wird.

7. Verfahren nach Anspruch 6,
**dadurch gekennzeichnet,**
daß die Oberfläche der Masse vor oder nach
dem Aushärten mit einer durchsichtigen Glas-
oder Kunststoffscheibe oder einer Kunststoffolie abgedeckt wird.

8. Verfahren nach Anspruch 6 oder 7,
**dadurch gekennzeichnet,**
daß man eine Masse verwendet, deren Brechungsindex möglichst weitgehend mit dem
des Materials des Gegenstands übereinstimmt.

9. Verfahren nach wenigstens einem der Ansprüche 6 bis 8,
**dadurch gekennzeichnet,**
daß das Profil mit einem aushärtbaren Kunstharz aufgefüllt wird.

10. Verfahren nach wenigstens einem der Ansprüche 6 bis 8,
**dadurch gekennzeichnet,**
daß das Profil mit einem thermoplastischen

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X<br>A | LU-A-80 642 (ALFRED EVERS)<br>* Seite 1, Zeile 1 - Seite 2, Zeile 19; Ansprüche 1,3; Abbildung *<br>--- | 1,2,6,7<br>3-5,8-10 | B32B17/10<br>C03C27/12 |
| X<br><br>A | US-A-4 934 792 (TOVI M)<br><br>* Ansprüche 1,4,6,7; Abbildungen 4,A-C *<br>--- | 1-4,6,8,9<br><br>5 | |
| X | GB-A-1 600 867 (M.F.T. LANGLANDS)<br>* Seite 2, Zeile 16 - Zeile 52; Ansprüche 1-5; Beispiel 3 *<br>--- | 1-4,6-9 | |
| X<br>A | DE-A-3 607 738 (DAIMLER-BENZ AG)<br>* das ganze Dokument *<br>--- | 1,4,6,9<br>3,8 | |
| X<br><br>A | GB-A-2 040 785 (PHILLIPS ELECTRONIC AND ASSOCIATED INDUSTRIES)<br>* Seite 1, Zeile 51 - Seite 3, Zeile 1; Ansprüche 1,3 * | 1,4,5<br><br>3 | |
| | ----- | | **RECHERCHIERTE SACHGEBIETE (Int. Cl.5)**<br><br>B32B<br>C03C |

Der vorliegende Recherchenbericht wurde für alle Patentansprüche erstellt

| Recherchenort | Abschlußdatum der Recherche | Prüfer |
|---|---|---|
| DEN HAAG | 26 JUNI 1992 | DERZ T. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
   Dokument

EPO FORM 1503 03.82 (P0403)